Europäisches Patentamt

European Patent Office

Office européen des brevets

(19)

(11) **EP 1 231 597 B1**

(12) **EUROPEAN PATENT SPECIFICATION**

(45) Date of publication and mention
of the grant of the patent:
**18.08.2004 Bulletin 2004/34**

(51) Int Cl.⁷: **G10L 19/00**, H04L 1/20

(21) Application number: **02100094.8**

(22) Date of filing: **01.02.2002**

(54) **Method and decoder for detecting bad speech frames based on the spectral difference to the last uncorrupted frame**

Verfahren und Dekodierer zur Detektion fehlerhafter Sprachrahmen auf Basis spektraler Unterschiede zum letzten fehlerfreien Rahmen

Procédé et décodeur pour la détection de trames de parole défectueuses basèe sur la difference spectrale envers la trame non-défectueuse la plus récente

(84) Designated Contracting States:
**AT BE CH CY DE DK ES FI FR GB GR IE IT LI LU MC NL PT SE TR**

(30) Priority: **08.02.2001 FI 20010235**

(43) Date of publication of application:
**14.08.2002 Bulletin 2002/33**

(73) Proprietor: **Nokia Corporation**
**02150 Espoo (FI)**

(72) Inventor: **Värilä, Sakari**
**00520, Helsinki (FI)**

(74) Representative: **Holmström, Stefan Mikael**
**Kolster Oy Ab,**
**Iso Roobertinkatu 23**
**00120 Helsinki (FI)**

(56) References cited:
**WO-A-01/11608**       **WO-A-98/13941**
**WO-A-98/38764**       **US-A- 5 579 435**
**US-A- 6 055 497**

• **NEWBERG D ET AL: "USING SPECTRAL DISTANCE MEASURES FOR VOCODER ERROR DETECTION" MOTOROLA TECHNICAL DEVELOPMENTS, MOTOROLA INC. SCHAUMBURG, ILLINOIS, US, vol. 23, 1 October 1994 (1994-10-01), pages 61-62, XP000468380**

## EP 1 231 597 B1

**Description**

The invention relates to processing information frames and, in particular, to detecting damaged information frames. The invention is applicable to detecting damaged speech frames in mobile systems, for instance, but the invention can also be utilized in other connections. However, in the following the invention will be described, by way of example, primarily with reference to speech frame processing in a mobile system.

There are previously known solutions, in which information frames that are found damaged are marked with a specific indicator (e.g. BFI, Bad Frame Indicator), which indicates that a damaged information frame is concerned. Thus, apparatuses performing further processing on the information frame are able to detect directly that the information frame is damaged. However, in practice there are situations where the apparatus processing the information frame receives a damaged information frame whose indicator indicates that the information frame is undamaged. This situation may arise e.g. in a mobile system, when the receiver receiving information frames is located at the extreme limits of radio range, in which case the received radio signal is weak, or when the receiver is handed over to another base transceiver station. The damaged information frame interpreted as undamaged may cause a very loud sound signal, which is conveyed to the user through a loudspeaker. To achieve a high level of user-friendliness requires that as many damaged information frames as possible could be detected before they cause disturbances.

Previously there is known from WO-A-9838764 a solution for detecting frame errors where comparison is made for parameters of a frame under consideration and parameters of a previous frame. This solution has, however, the disadvantage that if the previous frame which has been used for comparison has been faulty, then the result is unreliable. Prior art solutions for detecting frame errors are also disclosed, for instance, in WO-A-9819341 and "Newberg D et al., "Using Spectral Distance measures for vo-coder error detection", Motorola Technical developments, Motorola Inc. Schaunburg, Illinois, US, vol.23, 1, October 1994, pages 61-62, XP000468380".

The object of the present invention is to solve the above problem and to provide a solution for processing the information frames such that it is possible to distinguish between damaged and undamaged information frames better than previously. This is achieved with a method according to independent claim 1 and a decoder according to independent claim 5.

The invention is based on the idea that successive, undamaged information frames should have certain continuity as regards the spectrum and the gain. Hence, when the information frames are e.g. speech frames, an undamaged speech frame can be detected on the basis that the parametric spectral difference as compared with a previous undamaged speech frame is below a predetermined limit, or that the change in gain as compared with a previous undamaged frame is below a predetermined limit. If neither of these conditions is fulfilled, there is reason to suspect that the information frame is damaged.

Thus, the most considerable advantage of the solution according to the invention is that it improves the user-friendliness of the system by enhancing the distinction between damaged and undamaged information frames. Moreover, the solution of the invention has an advantage that damaged and undamaged information frames can be distinguished from one another also in situations, where information on the quality of the transmission path employed is not available. Hence, the solution of the invention can also be utilized in cases, where information frames are transmitted in direct mode from a transmitter to a receiver.

The invention can also be utilized in the existing systems, because the necessary amendments can be performed by means of software. The software amendment is then implemented in decoders of the system, which are reprogrammed. Because the invention does not affect the actual decoding, the invention can be utilized in connection with the existing decoding algorithms.

In one preferred embodiment of the method according to the invention, signal energy of the information frame is also considered when the correctness of the information frame is checked. If it is then found that the initial value and variation range of the signal energy is below a predetermined limit, one or more information frames under checking is classified undamaged, even though the parametric spectral difference and change in gain would exceed the limits defined for them. Practical tests have shown that by considering the signal energy in addition to the above-mentioned spectral difference and change in gain, it is possible to distinguish between the undamaged and damaged information frames more effectively than before.

Said predetermined limit, with which the signal energy is compared, can preferably be an adaptively updated limit. According to the invention, the limit can thus be updated adaptively, for instance, on the basis of the average energy of the latest undamaged frames.

The preferred embodiments of the method and the decoder of the invention are disclosed in the attached dependent claims 2 to 4 and 6 to 9.

In the following the invention will be described in greater detail, by way of example, with reference to the attached drawings, wherein

Figure 1 is a flow chart of a first preferred embodiment of the method of the invention;

Figure 2 is a flow chart of a second preferred embodiment of the method of the invention; and

Figure 3 is a block diagram of a first preferred embodiment of the decoder of the invention.

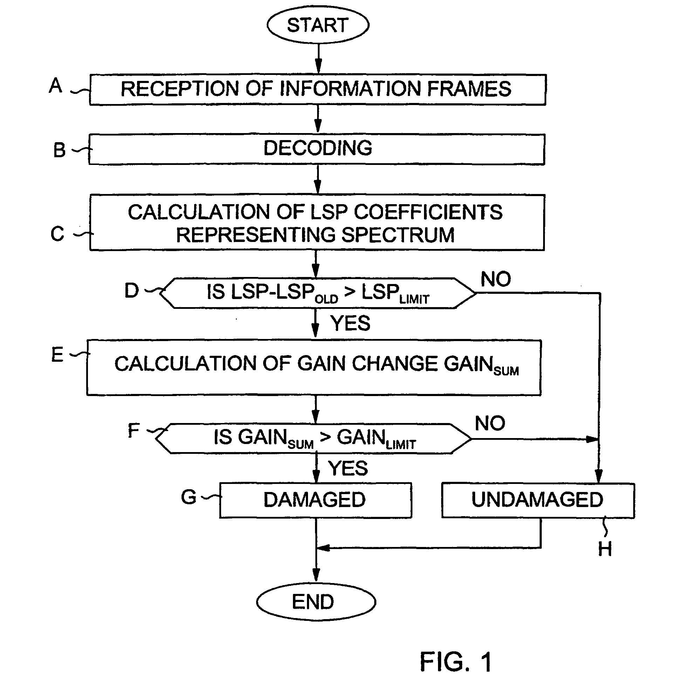

Figure 1 is a flow chart of a first preferred embodiment of the method of the invention. The flow chart of Figure 1 presents how the method of the invention is utilized in processing speech frames of a TETRA (TErrestrial Trunked RAdio) system, whereby the method of the invention enables the distinction between undamaged and damaged speech frames. The method of the invention is suitable for utilization in a decoder of a mobile station, for instance, or alternatively, in a decoder used for decoding signals received by a base transceiver station, for instance.

In block A, information frames, which in the case of Figure 1 consist of speech frames, are received over a radio path. In block B, the received speech frames are decoded.

In block C, a check for verifying the correctness of the received frames is started. First are calculated LSP (Line Spectral Pairs) coefficients representing the spectrum, in a manner known per se, on the basis of the data included in one or more frames under checking. In the TETRA system, channel coding is based on a 60 ms speech period which includes two 30 ms speech frames. Thus, in the TETRA system the LSP coefficients are calculated for two speech frames at a time. One speech frame includes ten LSP coefficients.

In the TETRA decoder, the reconstructed speech signal s(n) is given by

$$\hat{s}(n) = u(n) - \sum_{i=1}^{10} \hat{a}_i \, \hat{s}(n-i)$$

where $a_i$ are interpolated LP (Linear Prediction) coefficients and u is an excitation signal. The LP coefficients can be calculated from the LSP coefficients and the excitation signal can be calculated as a combination of a previous excitation, gain terms and an algebraic code-vector. The LSP coefficients and the gain terms are in index form in the encoded speech frame, vector-quantized into codebooks, so the actual coefficient values are tabulated in a decoding stage, by means of the table indices included in the encoded frame, by direct index indication, into LSP and gain term tables in the memory of the decoder.

After the LSP coefficients representing the spectrum of one or more frames under checking have been calculated, spectral difference of a single speech frame is compared with the spectrum of a previous, correct speech frame in block D. The difference in the spectrum is given by the formula

$$LSP\text{-}LSP_{OLD} = \sum_{i=1}^{10} \left[ abs\left( lsp_B(i) - lsp_A(i+10) \right) + abs\left( lsp_B(i+10) - lsp_B(i) \right) \right]$$

where the subscript B represents the current channel coding frame comprising two speech frames, i.e. 20 LSP coefficients, and the subscript A represents the previous, undamaged channel coding frame.

If on the basis of the uninterpolated LSP coefficients used in calculation the spectral difference is less than a predetermined limit $LSP_{LIMIT}$, the speech frame under checking is classified undamaged in block H.

Whereas, if the parametric spectral difference (or the absolute value of the spectral difference) exceeds the limit $LSP_{LIMIT}$ determined for it, the speech frame may be damaged. Then, a change in gain $GAIN_{SUM}$ is calculated in block E on the basis of the data included in the speech frame.

The TETRA system speech frame comprises gain terms, which indicate how much gain should be changed when said speech frame is reproduced as compared with the gain used in reproducing the previous speech frame. According to the invention, this can be utilized in distinguishing damaged from undamaged speech frames. If it is detected in block F that the gain terms belonging to the data in the speech frame indicate that the change in gain $GAIN_{SUM}$ exceeds a predetermined limit $GAIN_{LIMIT}$, i.e. the gain increases more than expected, the speech frame under checking is classified damaged in block G. Whereas, if the change in gain does not exceed the limit, the speech frame is classified undamaged in block H.

As appears from the above description, in connection with the TETRA speech frame processing, advantageously two speech frames are always checked at a time (due to the 60 ms channel coding period), in order that the coefficients LSP and the change in gain $GAIN_{SUM}$ could be calculated. The decision on whether the two speech frames under checking are damaged or undamaged can be made case-specifically, separately for the speech frames under checking or, alternatively, as a single decision concerning both speech frames. Practical tests have proved that at least the solution, in which the decision is made jointly for both speech frames under checking, produces an improved quality of speech.

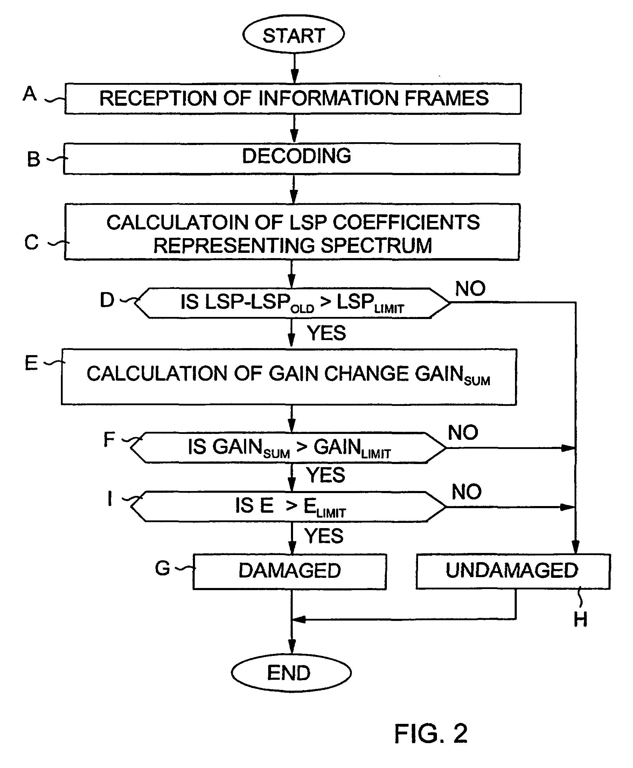

Figure 2 is a flow chart of a second preferred embodiment of the method according to the invention. The flow chart of Figure 2 corresponds to a great extent to that of Figure 1. However, in the flow chart of Figure 2 (unlike in the case of Figure 1) the speech frame is not directly classified damaged, if the checking in block F shows that the change in gain $GAIN_{SUM}$ exceeds the predetermined limit $GAIN_{LIMIT}$. In the case of Figure 2, an additional checking is then carried out in block I on the basis of signal energy. In the TETRA system the signal energy for the speech frame can be calculated by the formula:

$$E = energy\,/\,frame = \sum_{n=0}^{239} x(n)^2$$

where x(n) is a decoded signal in the time domain to be checked and the frame length is 240 samples.

If it is detected in block I that the signal energy E of one or more speech frames under checking is below a predetermined limit $E_{LIMIT}$, the speech frame is classified undamaged in block H. Whereas, if the limit $E_{LIMIT}$ is exceeded, the speech frame is classified damaged in block G. According to the invention, said limit $E_{LIMIT}$ can be adaptively updated, for instance, on the basis of the average energy of the latest undamaged frames.

The checking in block I makes it possible that the prevailing signal energy can be considered in the classification of the speech frame. When the signal energy is low, it is found that the spectral differences may vary considerably. If, in addition to the parametric spectral difference, only the change in gain $GAIN_{SUM}$ is then considered, it is possible that the speech frame whose gain terms indicate that gain should be increased considerably (more than $GAIN_{LIMIT}$) is classified damaged, even though the signal energy after the change in gain would only rise from a very low level to a 'normal' level. The above-described situation can be avoided by performing the additional checking of block I on the basis of the signal energy. Practical test have proved that, at least in some circumstances, the additional checking of block I clearly enhances the distinction between the damaged and undamaged speech frames.

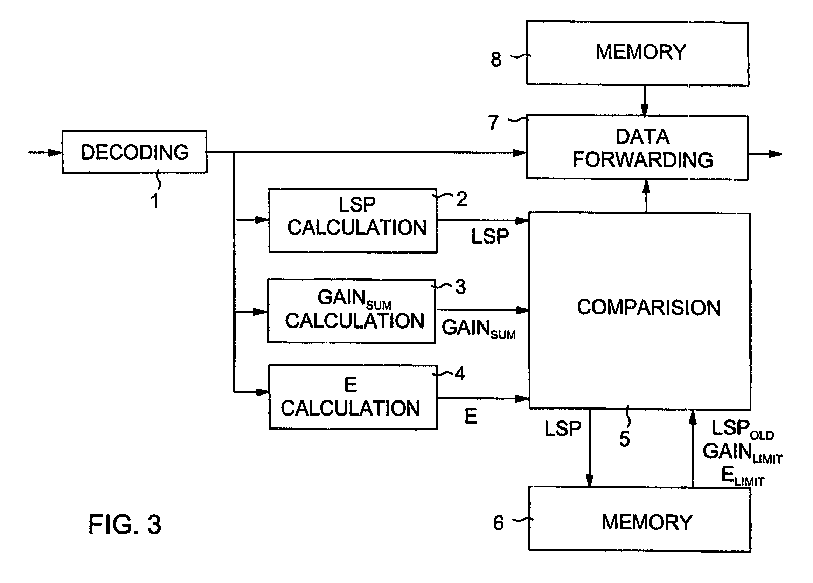

Figure 3 shows a block diagram of a first preferred embodiment of a decoder of the invention. The decoder of Figure 3 can be utilized, for instance, for processing the TETRA speech frames between a base transceiver station and a mobile services switching centre, or alternatively, e.g. in a mobile station of the TETRA system. The decoder of Figure 3 enables classification of the speech frames into undamaged and damaged ones, even though information on the properties of the transmission path employed would not be available. Thus, speech frames transmitted in direct mode between two TETRA mobile stations can be classified by means of the decoder in Figure 3. The block operations shown in the block diagram of Figure 3 can be implemented by circuitry, software or a combination thereof.

Decoding of information frames, i.e. speech frames in the case of Figure 3, is carried out by decoding means 1 in a manner known per se. Because the channel coding in the TETRA system is based on a 60 ms speech period, the decoding means 1 process two 30 ms speech frames at a time (2 x 137 bits).

In the case of Figure 3, the decoder comprises checking means 2 to 6, which check on the basis of the data included in the decoded speech frame whether the speech frame is damaged or undamaged. To enable this, uninterpolated coefficients LSP (20 x 16 bits) representing the speech frame spectrum are conveyed to block 2. The gain terms of two speech frames (2 x 64 bits) are conveyed to block 3, where the change in gain $GAIN_{SUM}$ is calculated. Samples of two speech frames (2 x 480 samples) are conveyed to block 4, where the signal energy E is calculated.

The computing operations of blocks 2 to 4 are carried out as described in connection with the flow chart of Figure 1. The obtained coefficients LSP representing the spectrum, the change in gain $GAIN_{SUM}$ and the signal energy E are conveyed to comparison block 5. Comparison block 5 is arranged to compare the values obtained by the computing operations with the predetermined limit values $LSP_{OLD}$, $GAIN_{LIMIT}$ and $E_{LIMIT}$ stored in a memory 6 as described in the flow chart of Figure 2, and on the basis of the comparison result to indicate whether one or more speech frames under checking is damaged or undamaged.

If the comparison performed in block 5 indicates that the speech frame is undamaged, the comparison block 5 supplies the coefficients LSP representing the spectrum received from block 2 to the memory 6, where said coefficients replace the previous comparison coefficients $LSP_{OLD}$. Thus, the coefficients LSP of the subsequent speech frame under checking are always compared with those of the previous undamaged speech frame.

The decoder block 7, from which the data included in the decoded information frame is forwarded, is responsive to the comparison block 7. If the comparison block 5 indicates after said comparison that one or more frames under checking are damaged, block 7 does not forward the data included in said speech frame. How block 7 operates in a case like this may vary, depending on the application. The main point is that data included in the speech frame that is classified damaged will not be forwarded. Optional operation alternatives include e.g. utilization of TETRA frame substitution or generation of comfort noise. To enable this, block 7 can retrieve from memory 8 data that enables generation of comfort noise.

It is to be understood that the above description and the relating figures are only intended to illustrate the present invention. Thus, the invention can also be utilized in other connections than in the TETRA system given by way of example in the above. It is obvious to a person skilled in the art that the invention can be varied and modified without deviating from the scope of the invention disclosed in the attached claims.

**Claims**

1. A method for processing information frames, the method comprising
   receiving information frames (A),
   decoding the received information frames (B), and
   checking the received information frames so as to verify their correctness, **characterized by**, for information frames under checking,
   calculating (D) a parametric spectral difference on the basis of the data included in the information frames as compared with a previous information frame that is found undamaged,
   calculating (E) a change in gain by summing the gain terms included in the information frames under checking, and
   classifying (D, F, H) the information frames under checking as undamaged if the parametric spectral difference is below a predetermined limit or if the change in gain is below a predetermined limit.

2. A method as claimed in claim 1, **characterized in that** if the parametric spectral difference is not below the predetermined limit and the change in gain is not below the predetermined limit, said checking comprises
   comparing (I) the signal energy of the information frames under checking with a predetermined limit, and
   classifying (H) the information frames under checking as undamaged if the signal energy is below said predetermined limit.

3. A method as claimed in claim 1 or 2, **characterized in that** said information frames are speech frames, which are received in direct mode in a mobile system.

4. A method as claimed in any one of claims 1 to 3, **characterized in that** if the comparison indicates that the information frames under checking are damaged, the data included in said information frames is substituted with predetermined data.

5. A decoder comprising
   means for receiving information frames,
   decoding means (1) for decoding received information frames and
   checking means (2 to 6) for checking the correctness of the decoded information frames, **characterized in that** the checking means are arranged
   to calculate (2) a parametric spectral difference on the basis of the data included in the information frames under checking as compared with the information frame that the checking means have last found undamaged,
   to calculate (3) a change in gain by summing the gain terms included in the information frames under checking, and
   to indicate (5) that said one or more information frames under checking is undamaged if the parametric spectral difference is below a predetermined limit or if the change in gain is below a predetermined limit.

6. A decoder as claimed in claim 5, **characterized in that** if the parametric spectral difference calculated by the checking means (2 to 6) is not below the predetermined limit and the change in gain is not below the predetermined limit, the checking means are arranged
   to compare (4, 5) the signal energy of said information frames under checking with a predetermined limit, and
   to indicate (5) that said information frames under checking are undamaged if the signal energy is below said predetermined limit.

7. A decoder as claimed in claim 5 or 6, **characterized in that** said decoder is a mobile system decoder and that said information frames consist of speech frames received in direct mode in the mobile system.

8. A decoder as claimed in any one of claims 5 to 7, **characterized in that** said decoder comprises means (7) responsive to the checking means (2 to 6) for substituting the data included in the information frames under checking with predetermined data, if the checking means (2 to 6) indicate that said information frames under checking are damaged.

9. A decoder as claimed in claim 8, **characterized in that** said predetermined data consists of parameters required for comfort noise generation.

**Patentansprüche**

1. Verfahren zur Verarbeitung von Informationsrahmen, wobei das Verfahren aufweist:

   Empfangen von Informationsrahmen (A),
   Decodieren der empfangenen Informationsrahmen (B), und
   Überprüfen der empfangenen Informationsrahmen, um ihre Korrektheit zu prüfen,

   **gekennzeichnet durch**, für Informationsrahmen, die gerade überprüft werden,
   Berechnen (D) einer parametrischen Spektraldifferenz auf der Basis der in den Informationsrahmen enthaltenen Daten im Vergleich zu einem vorherigen Informationsrahmen, der als fehlerfrei befunden wurde,
   Berechnen (E) einer Verstärkungsänderung **durch** Summieren der in den Informationsrahmen, die gerade überprüft werden, enthaltenen Verstärkungsterme,
   Klassifizieren (D, F, H) der Informationsrahmen, die gerade überprüft werden, als fehlerfrei, falls die parametrische Spektraldifferenz unter einem vorbestimmten Grenzwert liegt oder falls die Verstärkungsänderung unter einem vorbestimmten Grenzwert liegt.

2. Verfahren gemäß Anspruch 1, **dadurch gekennzeichnet, dass** falls die parametrische Spektraldifferenz nicht unter dem vorbestimmten Grenzwert liegt und die Verstärkungsänderung nicht unter dem vorbestimmten Grenzwert liegt, das Überprüfen
   Vergleichen (I) der Signalenergie der Informationsrahmen, die gerade überprüft werden, mit einem vorbestimmten Grenzwert und
   Klassifizieren (H) der Informationsrahmen, die gerade überprüft werden, als fehlerfrei, falls die Signalenergie unter dem vorbestimmten Grenzwert liegt,
   aufweist.

3. Verfahren gemäß Anspruch 1 oder 2, **dadurch gekennzeichnet, dass** die Informationsrahmen im Direktmodus in einem Mobilsystem empfangene Sprachrahmen sind.

4. Verfahren gemäß einem der Ansprüche 1 bis 3, **dadurch gekennzeichnet, dass** falls der Vergleich ergibt, dass die Informationsrahmen, die gerade überprüft werden, fehlerhaft sind, die in den Informationsrahmen enthaltenen Daten durch vorbestimmte Daten ersetzt werden.

5. Decoder mit
   einer Einrichtung zum Empfangen von Informationsrahmen,
   einer Decodiereinrichtung (1) zum Decodieren empfangener Informationsrahmen und
   einer Überprüfungseinrichtung (2 bis 6) zum Überprüfen der Korrektheit der decodierten Informationsrahmen, **dadurch gekennzeichnet, dass** die Überprüfungseinrichtung dazu angepasst ist,
   eine parametrische Spektraldifferenz auf der Basis der in den Informationsrahmen, die gerade überprüft werden, enthaltenen Daten im Vergleich zu dem Informationsrahmen zu berechnen (2), den die Überprüfungseinrichtung zuletzt als fehlerfrei befunden hat,
   eine Verstärkungsänderung durch Summieren der in den Informationsrahmen, die gerade überprüft werden, enthaltenen Verstärkungsterme zu berechnen (3),
   anzuzeigen (5), dass der eine oder die mehreren Informationsrahmen, die gerade überprüft werden, fehlerfrei sind, falls die parametrische Spektraldifferenz unter einem vorbestimmten Grenzwert liegt oder falls die Verstärkungsänderung unter einem vorbestimmten Grenzwert liegt.

6. Decoder gemäß Anspruch 5, **dadurch gekennzeichnet, dass** falls die durch die Überprüfungseinrichtung (2 bis 6) berechnete parametrische Spektraldifferenz nicht unter dem vorbestimmten Grenzwert liegt und die Verstärkungsänderung nicht unter dem vorbestimmten Grenzwert liegt, die Überprüfungseinrichtung dazu angepasst ist,
   die Signalenergie der Informationsrahmen, die gerade überprüft werden, mit einem vorbestimmten Grenzwert zu vergleichen (4, 5), und
   anzuzeigen (5), dass die Informationsrahmen, die gerade überprüft werden, fehlerfrei sind, falls die Signalenergie unter dem vorbestimmten Grenzwert liegt.

7. Decoder gemäß Anspruch 5 oder 6, **dadurch gekennzeichnet, dass** der Decoder ein Mobilsystem-Decoder ist, und dass die Informationsrahmen aus im Direktmodus im Mobilsystem empfangenen Sprachrahmen bestehen.

**8.** Decoder gemäß einem der Ansprüche 5 bis 7, **dadurch gekennzeichnet, dass** der Decoder eine auf die Überprüfungseinrichtung (2 bis 6) ansprechende Einrichtung (7) zum Ersetzen der in den Informationsrahmen, die gerade überprüft werden, enthaltenen Daten durch vorbestimmte Daten, falls die Überprüfungseinrichtung (2 bis 6) anzeigt, dass die Informationsrahmen, die gerade überprüft werden, fehlerhaft sind, aufweist.

**9.** Decoder gemäß Anspruch 8, **dadurch gekennzeichnet, dass** die vorbestimmten Daten aus zur Erzeugung von Hintergrundrauschen benötigten Parametern bestehen.

**Revendications**

**1.** Procédé pour le traitement de trames de données, le procédé consistant à :

réceptionner des trames de données (A) ;
décoder les trames de données réceptionnées (B) ; et
vérifier les trames de données réceptionnées afin de vérifier leurs justesses, **caractérisé par**, en ce qui concerne les trames de données en cours de vérification,
le calcul (D) d'une différence spectrale paramétrique sur la base des données comprises dans les trames de données ainsi comparées avec une trame de données précédente, laquelle a été trouvée intacte ;
le calcul (E) d'un changement dans le gain en additionnant les termes du gain compris dans les trames de données en cours de vérification ; et
le classement (D, F, H) des trames de données en cours de vérification, comme intactes si la différence spectrale paramétrique est inférieure à une limite prédéterminée ou si le changement dans le gain est inférieur à une limite prédéterminée.

**2.** Procédé selon la revendication 1, **caractérisé en ce que** si la différence spectrale paramétrique n'est pas inférieure à la limite prédéterminée et le changement dans le gain n'est pas inférieur à la limite prédéterminée, ladite vérification consiste à :

comparer (I) l'énergie du signal de la trame de données en cours de vérification avec une limite prédéterminée ; et
classer (H) les trames de données en cours de vérification, comme intactes si l'énergie du signal est inférieure à ladite limite prédéterminée.

**3.** Procédé selon la revendication 1 ou 2, **caractérisé en ce que** lesdites trames de données sont des trames de parole, lesquelles sont reçues en mode direct dans un système mobile.

**4.** Procédé selon l'une quelconque des revendications 1 à 3, **caractérisé en ce que** si la comparaison indique que les trames de données en cours de vérification sont endommagées, les données comprises dans lesdites trames de données sont substituées par des données prédéterminées.

**5.** Décodeur comprenant :

des moyens pour réceptionner des trames de données ;
des moyens de décodage (1) pour décoder les trames de données réceptionnées ; et
des moyens de vérification (de 2 à 6) pour vérifier la justesse des trames de données réceptionnées, **caractérisé en ce que** les moyens de vérification soient arrangés
pour calculer (2) une différence spectrale paramétrique sur la base des données comprises dans les trames de données en cours de vérification ainsi comparées avec une trame de données que les moyens de vérification ont précédemment trouvé intacte ;
pour calculer (3) un changement dans le gain en additionnant les termes du gain compris dans les trames de données en cours de vérification ; et
pour indiquer (5) que ladite ou lesdites trames de données en cours de vérification sont intactes si la différence spectrale paramétrique est inférieure à une limite prédéterminée ou si le changement dans le gain est inférieur à une limite prédéterminée.

**6.** Décodeur selon la revendication 5, **caractérisé en ce que** si la différence spectrale paramétrique calculée à l'aide des moyens de vérification (de 2 à 6) n'est pas inférieure à la limite prédéterminée et le changement dans le gain n'est pas inférieur à la limite prédéterminée, les moyens de vérification sont prévus

pour comparer (4, 5) l'énergie du signal de ladite trame de données en cours de vérification avec une limite prédéterminée ; et

pour indiquer (5) que lesdites trames de données en cours de vérification, sont intactes si l'énergie du signal est inférieure à ladite limite prédéterminée.

7. Décodeur selon l'une quelconque des revendications 5 à 7, **caractérisé en ce que** ledit décodeur est un décodeur d'un système mobile et que lesdites trames de données consistent en des trames de parole reçues en mode direct dans le système mobile.

8. Décodeur selon l'une quelconque des revendications 5 à 7, **caractérisé en ce que** ledit décodeur comprend des moyens (7) sensibles aux moyens de vérification (de 2 à 6) pour substituer les données comprises dans les trames de données en cours de vérification par des données prédéterminées, si les moyens de vérification (de 2 à 6) indiquent que lesdites trames de données en cours de vérification sont endommagées.

9. Décodeur selon la revendication 8, **caractérisé en ce que** lesdites données prédéterminées consistent en des paramètres nécessaires pour générer un bruit de confort.

START

A — RECEPTION OF INFORMATION FRAMES

B — DECODING

C — CALCULATION OF LSP COEFFICIENTS REPRESENTING SPECTRUM

D — IS LSP-LSP$_{OLD}$ > LSP$_{LIMIT}$ — NO

YES

E — CALCULATION OF GAIN CHANGE GAIN$_{SUM}$

F — IS GAIN$_{SUM}$ > GAIN$_{LIMIT}$ — NO

YES

G — DAMAGED

UNDAMAGED — H

END

FIG. 1

START

A — RECEPTION OF INFORMATION FRAMES

B — DECODING

C — CALCULATOIN OF LSP COEFFICIENTS REPRESENTING SPECTRUM

D — IS LSP-LSP$_{OLD}$ > LSP$_{LIMIT}$    NO

YES

E — CALCULATION OF GAIN CHANGE GAIN$_{SUM}$

F — IS GAIN$_{SUM}$ > GAIN$_{LIMIT}$    NO

YES

I — IS E > E$_{LIMIT}$    NO

YES

G — DAMAGED

UNDAMAGED — H

END

FIG. 2

FIG. 3

EP 1 231 597 B1